# EUROPEAN PATENT SPECIFICATION

(11) **EP 2 979 790 B1**
(45) Date of publication and mention of the grant of the patent: **14.06.2017**
(21) Application number: 15179191.0
(22) Date of filing: 30.07.2015
(51) Int. Cl.: B23B 31/00, B23B 31/107, B25B 23/00

(54) **TOOL BIT HOLDER FOR POWER TOOL**
DREHMEISSELHALTER FÜR ELEKTROWERKZEUG
SUPPORT DE GRAIN POUR UN OUTIL ÉLECTRIQUE

(30) Priority: 31.07.2014 US 201462031478 P
(43) Date of publication of application: 03.02.2016
(73) Proprietor: Black & Decker Inc., Newark, Delaware 19711 (US)
(72) Inventor: Peters, Michael P, Lutherville, MD Maryland 21093 (US); Santamarina, Aland, Columbia, MD Maryland 21044 (US)
(74) Representative: SBD IPAdmin

(56) References cited:
- EP-A1- 2 283 974
- WO-A1-2005/089989
- WO-A2-98/51450
- DE-U1- 29 624 279
- US-B1- 6 474 656

## Description

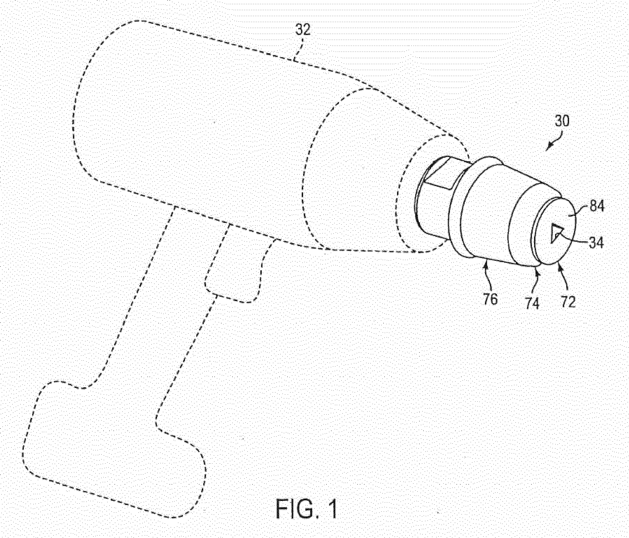

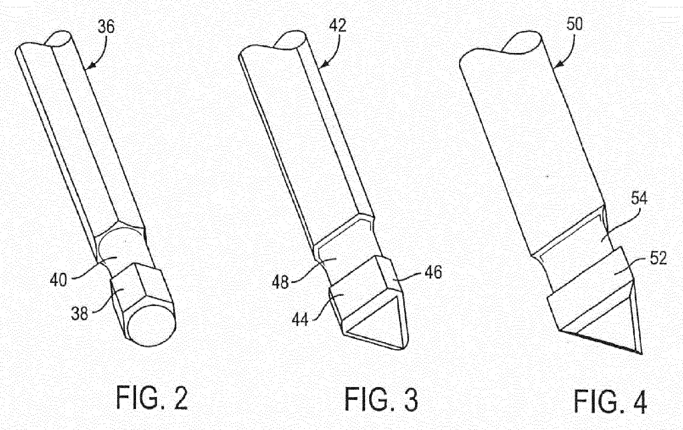

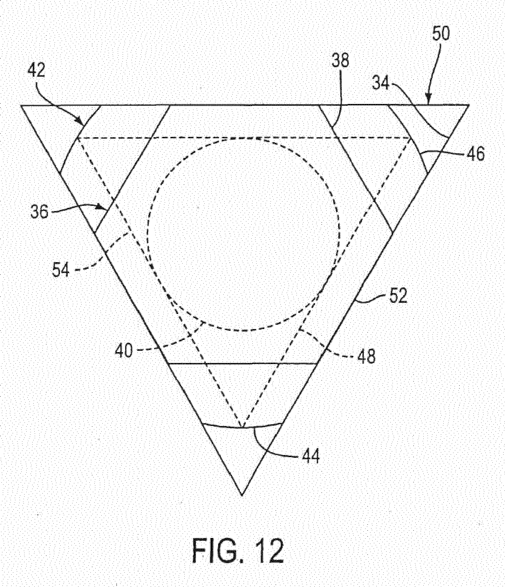

This application relates to a tool bit holder as per the preamble of claim 1. An example of such a holder is disclosed by WO 98/51450 A. Referring to FIGS. 1-14, U.S. Patent No. 6,474,656, discloses a chuck 30 that can be coupled to a power driver such as, for example, a drill 32, shown in phantom, for rotating the chuck. The chuck 30 is designed with a triangular shaped shank-receiving opening or bore 34 for receiving and locking differently configured shanks of a plurality of accessories, including, for example, (1) a bit 36 (FIG. 2) having a hexagonal shank 38, with a groove 40, (2) a bit 42 (FIG. 3) having a triangular cross-sectioned shank 44 formed with slightly convex surfaces 46 (FIG. 12) at corners of the triangular cross section, and with a groove 48, and (3) a bit 50 (FIG. 4) having a triangular cross-sectioned shank 52, with a groove 54.

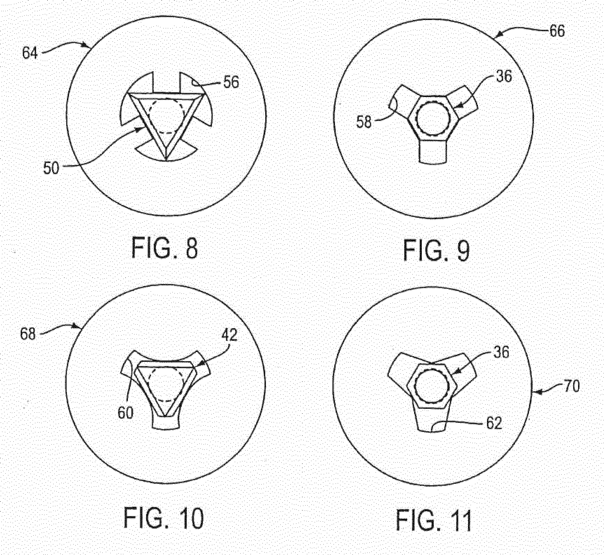

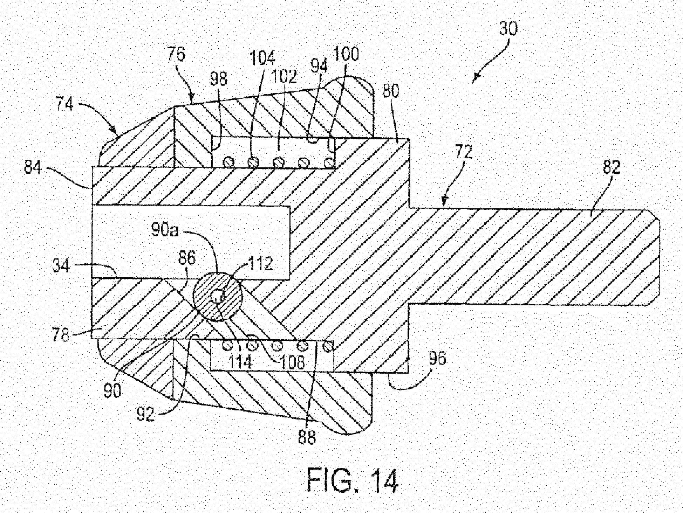

The shanks 38, 44 and 52 of the three bits 36, 42 and 50, respectively, may also be received and gripped by chucks having other shank-receiving openings such as, for example, the illustrated front-face openings 56, 58, 60 and 62 of chucks 64, 66, 68 and 70, respectively, as shown in FIGS. 8, 9, 10 and 11, respectively. The shanks 38, 44 and 52 may also be received in the various shank-receiving openings of the chucks disclosed in a now abandoned patent application identified by U.S. Ser. No. 60/108,336, filed on Nov. 13, 1998, and its successor nonprovisional patent application identified by U.S. Ser. No. 09/439,505, filed on Nov. 12, 1999. Referring to FIG. 14, the chuck 30 includes a chuck body 72, an end cap 74 and a sleeve 76. The chuck body 72 is formed integrally in three sections identified as a forward section 78 having a first exterior diameter, an intermediate section 80 having a second exterior diameter greater than the first diameter, and a rearward section 82 having a third exterior diameter less than the first diameter. The shank-receiving opening 34 is formed axially in the forward section 78 from a front face 84 thereof for a distance equal to about three-fourths of the axial length of the forward section.

A passage 86 is formed through the forward section 78 between an exterior peripheral surface 88 thereof and into communication with the opening 34. The passage 86 is formed at an angle relative to the axis of the chuck 30 and extends from the juncture thereof with the peripheral surface 88, toward the axis and the front face 84. The passage 86 is sized to receive a ball 90 for movement therein.

The sleeve 76 is formed with a bore 92 which is located about the peripheral surface 88 of the body 72 to allow axial movement of the sleeve relative to the body. The sleeve 76 is formed with a counterbore 94, portions of which are located about an exterior peripheral surface 96 of the intermediate section 80 for axial movement relative thereto. A counterbore base surface 98 is formed in the sleeve 76 and, together with the counterbore 94, the peripheral surface 88 and a forward surface 100 of the intermediate section 80, defines an enclosed chamber 102 for receipt of a spring 104. The end cap 74 is press fit onto a forward portion of the peripheral surface 88 of the body 72, whereby the sleeve 76 is captured in the assembled arrangement, as illustrated, but can be moved axially relative to the body for a limited axial distance.

The rearward section 82 of the body 72 forms a stem or shank which can be assembled and gripped within the drill 32 to facilitate rotation of the chuck 30 when the drill is operated. Alternatively, the rearward section 82 could be formed with a threaded axial bore from the rear thereof to facilitate the mounting of the chuck 30 onto a threaded spindle of the drill 32.

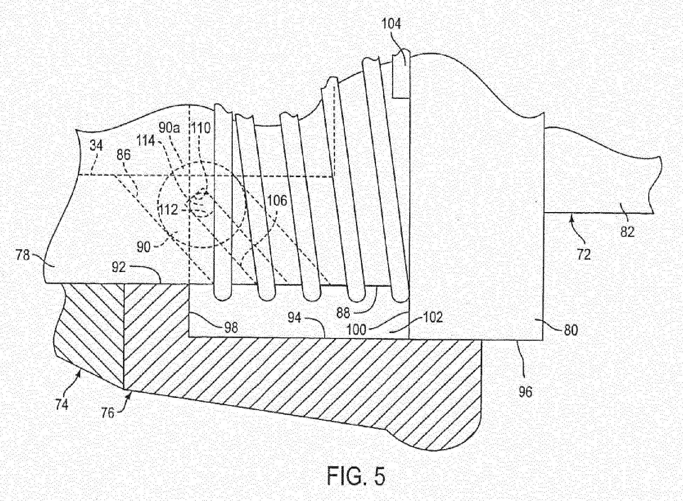

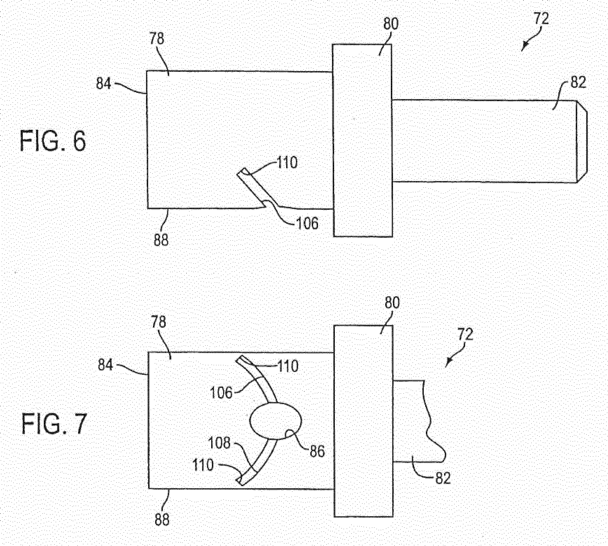

Referring to FIG. 7, two interfacing, spaced slots 106 and 108 are formed in opposite wall portions of the passage 86. Each of the slots 106 and 108 extend from the opening of the passage 86, which is contiguous with the peripheral surface 88 of the chuck body 72, to a squared floor 110, near the juncture of the passage with the opening 34. As shown in FIG. 5, a forward corner of the squared floor 110 of each of the slots 106 and 108 slightly overlaps the counterbore base surface 98 of the sleeve 76. As shown in FIG. 6, the slots, represented in the figure by the slot 106 is formed at the same forward, axially-directed angle as the passage 86.

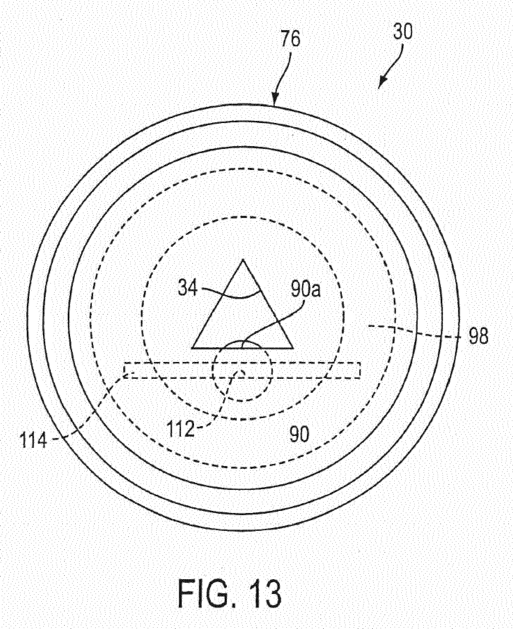

Referring to FIGS. 5, 13 and 14, the ball 90 is formed with a through hole 112 for receiving an intermediate portion of a pin 114, which extends from opposite sides of the ball by equal distances. As shown in FIG. 13, opposite ends of the pin 114 extend to a location where the ends overlap the base surface 98 and, as illustrated in FIG. 5, are also located in the floor 110 of the slots 106 and 108 when the ball 90 is positioned so that a small portion 90 a of the ball extends into the opening 34. In this position, the spring 104 is resting on the adjacent portions of the pin 114 to normally urge the pin into engagement with the floor 110 of each of the slots 106 and 108, and into engagement with adjacent portions of base surface 98 of the sleeve 76. This provides a means for normally urging the ball 90 into a position where the portion 90 a of the ball extends into the opening 34.

When using the chuck 30, an operator inserts, for example, the rearward end of the shank 52 (FIG. 4) of the bit 50 into the triangular opening 34 of the chuck. Upon continued insertion movement of the bit 50, the rearward end of the shank 52 engages a means for locking the shank with the chuck 30, including the ball 90 and the portion 90 a thereof, and urges the ball fully into the passage 86, which allows continued insertion movement of the bit. Eventually, the groove 54 of the bit 50 becomes aligned with the passage 86 and the biasing force of the compressed spring 104 urges the ball 90, as a locking element, further into the passage whereby the portion 90 a enters the groove 54 to effectively lock the bit 50 with chuck 30 through the action of the means for locking.

In order to remove the bit 50 from the chuck 30, the operator retracts the sleeve 76, whereby the base surface 98 of the sleeve is moved rearward of the chuck to move the ends of the pin 114 angularly rearward within the slots 106 and 108. Eventually, upon the angularly rearward movement of the ball 90, the portion 90 a thereof is withdrawn into the passage 86 and the bit 50 can now be removed from the chuck 30.

Referring to FIG. 12, a solid line triangle forms the perimeter of the figure and represents the triangular opening 34 of the chuck 30, on the one hand, and also represents the triangular shank 52 (FIG. 4) of the bit 50, on the other hand, with the shank being inserted into the opening. The dashed line triangle within the solid line triangle represents the groove 54 of the bit 50.

Major portions of the solid line triangle also represent the shank 44 (FIG. 3) of the bit 42, with the convex surfaces 46 also being shown, all of which are located with the opening 34. The dashed line triangle also represents the groove 48 of the bit 42.

Further, three solid line surfaces of the hex configuration of the shank 38 (FIG. 2) of the bit 36 are shown in overlapping arrangement with intermediate portions of respective sides of the solid lines which represent the opening 34. The three solid lines, which represent the remaining three sides of the shank 38, are shown within the solid line representation of the opening 34. The dashed line circle in the center of FIG. 12 represents the groove 40 of the bit 36. The invention is implemented by a tool bit holder having the features of claim 1. Additional embodiments are implemented by the features of the dependent claims.

Advantages may include one or more of the following. The tool bit holder non-rotationally and axially retains a tool bit while allowing for quick insertion and release of the tool bit from the tool bit holder. The tool bit holder can be configured to hold two or more sizes of shanks of tool bits in the same tool bit holder. These and other advantages and features will be apparent from the detailed description and the drawings.

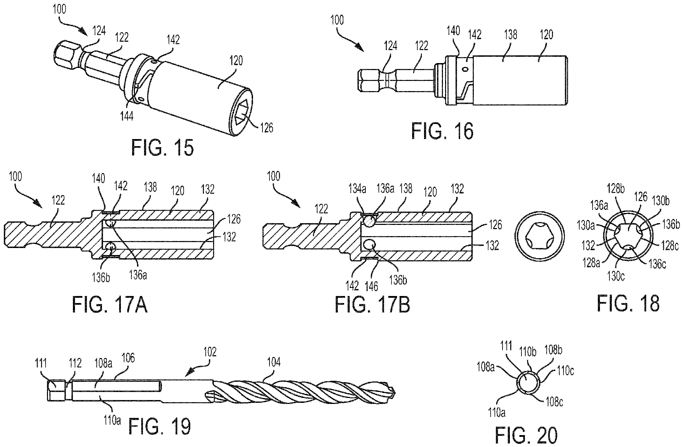

Referring to FIGS. 15-20, a tool bit holder 100 can be coupled to a power tool such as the aforementioned drill 32. The tool bit holder 100 may be configured to receive a plurality of tool bits having a shank with a polygonal cross section with an annular groove formed in the cross-section. For example, the tool bit holder 100 may be configured to receive and retain the bit 36 with a hexagonal shank and a groove 40 (FIG. 2), the bit 42 with a triangular cross-sectioned shank 44 with a groove 48 and formed with convex surfaces 46 at corners formed at junctions of the flat faces of the triangular cross-section (FIG. 12), or the bit 50 having a triangular cross-sectioned shank with a groove 54. In one particular embodiment, as shown in FIGS. 15-18, the tool bit holder 100 is configured to receive and retain a drill bit 102 having a fluted cutting portion 104 and a shank portion 106. The shank portion 106 has a cross-section with a plurality of flat walls 108a, 108b, 108c arranged in a triangle with three slightly convex surfaces 110a, 110b, 110c at corners of the triangle formed at junctions between adjacent flat walls 108a, 108b, 108c. The shank portion 106 also includes an annular groove 112.

The tool bit holder 100 includes a holder body 120 and a shank portion 122. The shank portion 122 has a polygonal cross-section (e.g., hexagonal) and an annular groove 124. The shank portion 122 is configured to be received and retained in a tool holder or chuck of a rotary power tool such as the drill 32. The holder body 120 has an inner wall 132 that defines a longitudinal bore 126 for receiving the shank 106 of the bit 102. The inner wall 132 is configured to generally match the cross-sectional shape of the shank 106. In particular, the inner wall 136 has three flat wall portions 128a, 128b, 128c arranged in a triangle with three slightly concave curved wall portions 130a, 130b, 130c at corners of the triangle formed at junctions between adjacent flat wall portions 128a, 128b, 128c.

The holder body 120 also defines three windows only one of which (134a) is shown. The windows are tapered and extend radially outward from the concave inner wall portions 130a, 130b, 130c. Each window 134a, 134b, 134c receives a retaining member in the form of a pin or a ball 136a, 136b, 136c that extends at least partially through the window 134a, 134b, 134c into the bore 126. The holder body 120 also includes a substantially cylindrical outer wall 138 with an annular groove 140. The annular groove 140 receives a substantially cylindrical elastic band 142 that abuts and biases the balls 136a, 136b, 136c radially inwardly toward the bore 126. The elastic band 142 may include a split 144 to facilitate attaching the elastic band 142 to the holder body 120.

In use, the shank 106 of the bit 102 is inserted into the bore 126 with the flat walls 110a, 110b, 110c of the shank 102 aligned with the flat wall portions 128a, 128b, 128c of the inner wall 132. The rear end portion 111 of the shank 106 pushes the balls 136a, 136b, 136c radially outward against the force of the elastic band 142. When the annular groove 112 of the shank 106 is aligned with the balls 136a, 136b, 136c, the elastic band 142 pushes the balls radially inward to engage the annular groove 112. The balls 136a, 136b, 136c axially retain the bit 102 in the bore 126, while the flat wall portions 128a, 128b, 128c non-rotationally retain the bit 102 in the bore. Thus, rotational motion of the holder 100 can be transmitted to the bit 102 without the bit 102 moving relative to the holder 100.

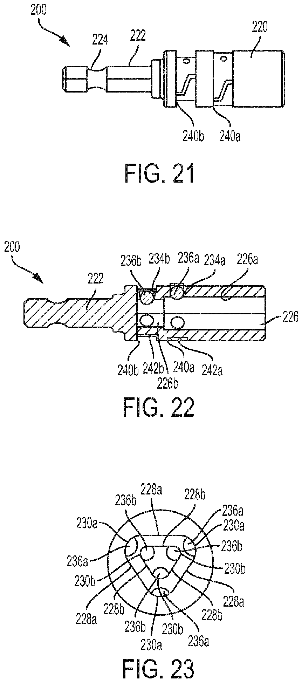

Referring to FIGS. 21-23, in another embodiment, a tool bit holder 200, similar to tool bit holder 100, may be configured to receive a plurality of tool bits having shanks with different sized polygonal cross sections. For example, the tool bit holder 200 may be configured to receive and retain the two different drill bits 102 having different diameter shank portions 106. The tool bit holder 200 includes a holder body 220 and a shank portion 222. The shank portion 222 has a polygonal cross-section (e.g., hexagonal) and an annular groove 224. The shank portion 222 is configured to be received and retained in a tool holder or chuck of a rotary power tool such as the drill 32.

The holder body 220 has an inner wall 232 that defines a longitudinal bore 226 for receiving the shank 106 of the bit 102. The longitudinal bore 226 includes a large diameter section 226a adjacent the front of the holder and a small diameter section 226b rearward of the large diameter section 226a. The large diameter section 226a is configured to receive and retain tool bits having a larger diameter shank, while the small diameter section 226b is configured to receive and retain tool bits having a smaller diameter shank. Each of the sections 226a, 226b is configured to generally match the cross-sectional shape of the shank 106. Like the inner wall 136 described above, each section 226a, 226b includes an inner wall having three flat wall portions 228a, 228b arranged in a triangle with three slightly concave curved wall portions 230a, 230b at corners of the triangle formed at junctions between adjacent flat wall portions 228a, 228b.

Each section 226a, 226b also defines three windows 234a, 234b (one of each of which is shown) extending radially outward from the concave inner wall portions 230a, 230b. Each window 234a, 234b receives a retaining member in the form of a pin or a ball 236a, 236b that extends at least partially through the window 234a, 234b, into the bore sections 226a, 226b. The holder body 220 also includes a substantially cylindrical outer wall 238 with annular grooves 240a, 240b positioned at the large and small diameter sections 226a, 226b. The annular grooves 240a, 240b each receive a substantially cylindrical elastic band 242a, 242b that abuts and biases the balls 230a, 230b radially inwardly toward the bore sections 226a, 226b. The elastic bands 242a, 242b each may include a split 244a, 244b to facilitate attaching the elastic bands 242a, 242b to the holder body 220.

In use, when the shank 106 of a large diameter bit 102 is inserted into the bore 226, the flat walls 110a, 110b, 110c of the shank 102 align with the flat wall portions 228a of the large diameter section 226a of the bore 226. The rear end portion 111 of the shank 106 pushes the balls 236a of the large diameter section 226a radially outward against the force of the elastic band 242a. When the annular groove 112 of the shank 106 is aligned with the balls 230a, the elastic band 242a pushes the balls 236a radially inwardly to engage the annular groove 112. The balls 236a axially retain the bit 102 in the large diameter section 226a of the bore 226, while the flat wall portions 228a non-rotationally retain the bit 102 in the large diameter section 226a of the bore 226. Thus, rotational motion of the holder 200 can be transmitted to the bit 102 without the bit 102 moving relative to the holder 200.

When the shank 106 of a small diameter bit 102 is inserted into the bore 226, shank extends past the large diameter section 226a and the flat walls 110a, 110b, 110c of the shank 102 align with the flat wall portions 228b of the small diameter section 226b of the bore 226. The rear end portion 111 of the shank 106 pushes the balls 236b of the small diameter section 226b radially outward against the force of the elastic band 242b. When the annular groove 112 of the shank 106 is aligned with the balls 230b, the elastic band 242b pushes the balls 236b radially inwardly to engage the annular groove 112. The balls 236b axially retain the bit 102 in the small diameter section 226b of the bore 226, while the flat wall portions 228b non-rotationally retain the bit 102 in the small diameter section 226b of the bore 226. Thus, rotational motion of the holder 200 can be transmitted to the bit 102 without the bit 102 moving relative to the holder 200.

Numerous modifications may be made to the exemplary implementations described above. For example, the bore in the holder could be formed with three or more diameter sections, each having a progressively larger diameter to receive and retain multiple diameters of bit shanks.

## Claims

1. A tool bit holder (100) for releasably retaining a shank (44) of a tool bit (42) having three flat faces and an annular groove (48), the tool bit holder comprising:
a holder body (120) that includes a shank-receiving bore (126) bounded by an inner wall (132) having three flat inner wall surfaces (128a, 128b, 128c);
a plurality of windows (134a, 134b, 134c) defined in the inner wall (132), each window extending radially outward from the bore (126);
a plurality of retaining members (136a, 136b, 136c), each retaining member received in one of the plurality of windows and extending at least partially through the window into the bore (126); and
an elastic band (142) disposed around one or more retaining members (136a, 136b, 136c) and biasing the one or more retaining members radially inward toward the bore (126);
wherein the flat wall surfaces of the bore (126) are configured to engage the flat faces of the tool bit (42) to non-rotationally retain the shank (44) of the tool bit in the tool bit holder and the retaining members (136a, 136b, 136c) are configured to engage the annular groove (48) of the tool bit to axially retain the tool bit in the tool bit holder; **characterised in that**:
the tool bit holder (100) is for releasably retaining a tool bit (42) with a triangular cross-sectioned shank (44), wherein the three flat faces of the shank of the tool bit are arranged generally in a triangle, and the three flat inner wall surfaces (128a, 128b, 128c) of the shank-receiving bore (126) of the holder body (120) are arranged generally in a triangle; and
the inner wall (132) of the shank-receiving bore (126) of the holder body (120) includes a concave wall surface (130a, 130b, 130c) at each junction between adjacent flat inner wall surfaces (128a, 128b, 128c), each concave wall surface configured to engage a convex wall surface (46) at a junction between adjacent flat faces of the tool bit shank (44), and each window (134a, 134b, 134c) is defined in one of the concave inner wall surfaces.

2. The tool bit holder (100) of claim 1, wherein the windows (134a, 134b, 134c) are tapered.

3. The tool bit holder (100) of claim 1 or claim 2, wherein each retaining member (136a, 136b, 136c) comprises a pin or a ball.

4. The tool bit holder (100) of any preceding claim, wherein the holder body (120) includes an outer surface (138) with an annular recess (140) that receives the elastic band (142).

5. The tool bit holder (100) of any preceding claim, further comprising a shaft (122) extending rearward from the holder body (120) and configured to be retained in a chuck or tool bit holder of a power tool.

6. The tool bit holder (100) of claim 5, wherein the shaft (122) includes a polygonal shank with an annular groove.

7. A tool bit holder (100) according to any preceding claim, the tool bit holder being suitable for releasably retaining shanks of at least two tool bits, each shank having a different diameter and each shank having three flat faces arranged generally in a triangle and an annular groove, wherein:
the holder body (220) has a front section (226a) having a larger diameter and a rear section (226b) having a smaller diameter, each section bounded by an inner wall having three flat inner wall surfaces arranged generally in a triangle;
a first window (234a) of the plurality of windows is defined in the inner wall of the front section (226a) and extends radially outward from the front section of the bore (226);
a second window (234b) of the plurality of windows is defined in the inner wall of the rear section (226b) and extends radially outward from the rear section of the bore (226);
a first retaining member (236a) of the plurality of retaining members extends at least partially through the first window (234a) into the front section of the bore (226);
a second retaining member (236b) of the plurality of retaining members extends at least partially through the second window (234b) into the rear section of the bore (226);
a first elastic band (242a) is disposed around the first retaining member (236a) and biases the first retaining member radially inward toward the front section (226a) of the bore; and
a second elastic band (242b) is disposed around the second retaining member (236b) and biases the second retaining member radially inward toward the rear section (226b) of the bore; and
wherein the flat wall surfaces (228a) of the front section (226a) of the bore (226) are configured to engage flat faces of a first tool bit of the at least two tool bits while the first retaining member (236a) engages the annular groove in the first tool bit to axially retain the shank of the first tool bit in the front section of the bore, and the flat wall surfaces (228b) of the rear section (226b) of the bore are configured to engage flat faces of a second tool bit of the at least two tool bits while the second retaining member (236b) engages the annular groove in the second tool bit to axially retain the shank of the second tool bit in the rear section of the bore.

8. The tool bit holder (100) of claim 7, wherein each of the inner walls includes a concave wall surface (230a, 230b) at each junction between adjacent flat inner wall surfaces (228a, 228b), each concave wall surface configured to engage a convex wall surface (46) at a junction between adjacent flat faces of the tool bit.

9. The tool bit holder (100) of claim 7, wherein the holder body (220) includes a first outer surface with a first annular recess (240a) that receives the first elastic band (242a), and a second outer surface with a second annular recess (240b) that receives the second elastic band (242b).

10. The tool bit holder (100) of claim 7, wherein the first window (234a) includes a first plurality of windows and the first retaining member (236a) includes a first plurality of retaining members with each of the first plurality of windows receiving one of the first plurality of retaining members.

11. A tool bit set comprising:
a said tool bit having a working portion and a said shank coupled to a rear end of the working portion; and
a tool bit holder (100) according to claim 1, wherein the elastic band (142) is disposed around the retaining members (136a, 136b, 136c) and biases the retaining members radially inward toward the bore (126).

## Patentansprüche

1. Drehmeißelhalter (100) zum lösbaren Halten eines Schaftes (44) eines Drehmeißels (42) mit drei flachen Flächen und einer ringförmigen Nut (48), wobei der Drehmeißelhalter aufweist:
einen Halterkörper (120), der eine Schaftaufnahmebohrung (126) aufweist, die durch eine Innenwand (132) begrenzt ist, die drei flache Innenwandflächen (128a, 128b, 128c) hat;
eine Vielzahl von in der Innenwand (132) definierten Fenstern (134a, 134b, 134c), wobei sich jedes Fenster von der Bohrung (126) radial nach außen erstreckt;
eine Vielzahl von Halteelementen (136a, 136b, 136c), wobei jedes Halteelement in einem der Vielzahl von Fenstern aufgenommen ist und sich mindestens teilweise durch das Fenster in die Bohrung (126) erstreckt; und
ein elastisches Band (142), das um eines oder mehrere Halteelemente (136a, 136b, 136c) angeordnet ist und das eine oder die mehreren Halteelemente radial nach innen in Richtung der Bohrung (126) vorspannt;
wobei die flachen Wandflächen der Bohrung (126) gestaltet sind, mit den flachen Flächen des Drehmeißels (42) in Eingriff zu sein, um den Schaft (44) des Drehmeißels im Drehmeißelhalter nicht-drehbar zu halten, und die Halteelemente (136a, 136b, 136c) gestaltet sind, mit der ringförmigen Nut (48) des Drehmeißels in Eingriff zu sein, um den Drehmeißel in dem Drehmeißelhalter axial zu halten;
**dadurch gekennzeichnet, dass**:
der Drehmeißelhalter (100) zum lösbaren Halten eines Drehmeißels (42) mit einem Schaft (44) mit dreieckigem Querschnitt vorgesehen ist, wobei die drei flachen Flächen des Schaftes des Drehmeißels im Allgemeinen in einem Dreieck angeordnet sind und die drei flachen Innenwandflächen (128a, 128b, 128c) der Schaftaufnahmebohrung (126) des Halterkörpers (120) im Allgemeinen in einem Dreieck angeordnet sind; und
wobei die Innenwand (132) der Schaftaufnahmebohrung (126) des Halterkörpers (120) an jeder Verbindungsstelle zwischen benachbarten flachen Innenwandflächen (128a, 128b, 128c) eine konkave Wandfläche (130a, 130b, 130c) aufweist, wobei jede konkave Wandfläche gestaltet ist, mit einer konvexen Wandfläche (46) an einer Verbindungsstelle zwischen benachbarten flachen Flächen des Drehmeißelschaftes (44) in Eingriff zu stehen, und jedes Fenster (134a, 134b, 134c) in einer der konkaven Innenwandflächen definiert ist.

2. Drehmeißelhalter (100) nach Anspruch 1, wobei die Fenster (134a, 134b, 134c) konisch sind.

3. Drehmeißelhalter (100) nach Anspruch 1 oder 2, wobei jedes Halteelement (136a, 136b, 136c) einen Stift oder eine Kugel aufweist.

4. Drehmeißelhalter (100) nach einem der vorhergehenden Ansprüche, wobei der Halterkörper (120) eine Außenfläche (138) mit einer ringförmigen Ausnehmung (140) aufweist, die das elastische Band (142) aufnimmt.

5. Drehmeißelhalter (100) nach einem der vorhergehenden Ansprüche, ferner aufweisend eine Welle (122), die sich von dem Halterkörper (120) nach hinten erstreckt und gestaltet ist, in einem Spannfutter oder Drehmeißelhalter eines Elektrowerkzeugs gehalten zu werden.

6. Drehmeißelhalter (100) nach Anspruch 5, wobei die Welle (122) einen polygonalen Schaft mit einer ringförmigen Nut aufweist.

7. Drehmeißelhalter (100) nach einem der vorhergehenden Ansprüche, wobei der Drehmeißelhalter zum lösbaren Halten von Schäften von mindestens zwei Drehmeißeln geeignet ist, wobei jeder Schaft einen unterschiedlichen Durchmesser hat und jeder Schaft drei flache Flächen hat, die im Allgemeinen in einem Dreieck und einer ringförmigen Nut angeordnet sind, wobei:
der Halterkörper (220) einen vorderen Abschnitt (226a) mit einem größeren Durchmesser und einen hinteren Abschnitt (226b) mit einem kleineren Durchmesser hat, wobei jeder Abschnitt durch eine Innenwand mit drei flachen Innenwandflächen, die Allgemeinen in einem Dreieck angeordnet sind, begrenzt ist;
ein erstes Fenster (234a) der Vielzahl von Fenstern in der Innenwand des vorderen Abschnitts (226a) definiert ist und sich von dem vorderen Abschnitt der Bohrung (226) radial nach außen erstreckt;
ein zweites Fenster (234b) der Vielzahl von Fenstern in der Innenwand des hinteren Abschnitts (226b) definiert ist und sich von dem hinteren Abschnitt der Bohrung (226) radial nach außen erstreckt;
ein erstes Halteelement (236a) der Vielzahl von Halteelementen sich mindestens teilweise durch das erste Fenster (234a) in den vorderen Abschnitt der Bohrung (226) erstreckt;
ein zweites Halteelement (236b) der Vielzahl von Halteelementen sich mindestens teilweise durch das zweite Fenster (234b) in den hinteren Abschnitt der Bohrung (226) erstreckt;
ein erstes elastisches Band (242a) um das erste Halteelement (236a) herum angeordnet ist und das erste Halteelement radial nach innen in Richtung des vorderen Abschnitts (226a) der Bohrung vorspannt; und
ein zweites elastisches Band (242b) um das zweite Halteelement (236b) herum angeordnet ist und das zweite Halteelement radial nach innen in Richtung des hinteren Abschnitts (226b) der Bohrung vorspannt; und
wobei die flachen Wandflächen (228a) des vorderen Abschnitts (226a) der Bohrung (226) gestaltet sind, mit den flachen Flächen eines ersten Drehmeißels der mindestens zwei Drehmeißel in Eingriff zu stehen, während das erste Halteelement (236a) mit der ringförmigen Nut in dem ersten Drehmeißel in Eingriff steht, um den Schaft des ersten Drehmeißels im vorderen Abschnitt der Bohrung axial zu halten, und die flachen Wandflächen (228b) des hinteren Abschnitts (226b) der Bohrung gestaltet sind, mit den flachen Flächen eines zweiten Drehmeißels der mindestens zwei Drehmeißel in Eingriff zu stehen, während das zweite Halteelement (236b) mit der ringförmigen Nut in dem zweiten Drehmeißel in Eingriff steht, um den Schaft des zweiten Drehmeißels im hinteren Abschnitt der Bohrung axial zu halten.

8. Drehmeißelhalter (100) nach Anspruch 7, wobei jede der Innenwände an jeder Verbindungsstelle zwischen benachbarten flachen Innenwandflächen (228a, 228b) eine konkave Wandfläche (230a, 230b) aufweist, wobei jede konkave Wandfläche gestaltet ist, mit einer konvexen Wandfläche (46) an einer Verbindungsstelle zwischen benachbarten flachen Flächen des Drehmeißels in Eingriff zu stehen.

9. Drehmeißelhalter (100) nach Anspruch 7, wobei der Halterkörper (220) eine erste Außenfläche mit einer ersten ringförmigen Ausnehmung (240a) aufweist, die das erste elastische Band (242a) aufnimmt, und eine zweite Außenfläche mit einer zweiten ringförmigen Ausnehmung (240b), die das zweite elastische Band (242b) aufnimmt.

10. Drehmeißelhalter (100) nach Anspruch 7, wobei das erste Fenster (234a) eine erste Vielzahl von Fenstern aufweist und das erste Halteelement (236a) eine erste Vielzahl von Halteelementen aufweist, wobei jedes der ersten Vielzahl von Fenstern eines der ersten Vielzahl von Halteelementen aufnimmt.

11. Drehmeißelsatz, aufweisend:
einen Drehmeißel mit einem Arbeitsabschnitt und einen Schaft, der mit einem hinteren Ende des Arbeitsabschnitts verbunden ist; und
ein Drehmeißelhalter (100) nach Anspruch 1, wobei das elastische Band (142) um die Halteelemente (136a, 136b, 136c) herum angeordnet ist und die Halteelemente radial nach innen in Richtung der Bohrung (126) vorspannt.

## Revendications

1. Support de foret (100) pour retenir de manière amovible une queue (44) d'un foret (42) ayant trois faces plates et une rainure annulaire (48), le support de foret comprenant :
un corps de support (120) qui comprend un alésage récepteur de queue (126) délimité par une paroi interne (132) ayant trois surfaces de paroi interne plates (128a, 128b, 128c) ;
une pluralité de fenêtres (134a, 134b, 134c) définies dans la paroi interne (132), chaque fenêtre s'étendant radialement vers l'extérieur de l'alésage (126) ;
une pluralité d'éléments de retenue (136a, 136b, 136c), chaque élément de retenue étant reçu dans l'une de la pluralité de fenêtres et s'étendant au moins en partie à travers la fenêtre dans l'alésage (126) ; et
une bande élastique (142) disposée autour d'un ou plusieurs éléments de retenue (136a, 136b, 136c) et pressant les un ou plusieurs éléments de retenue radialement vers l'intérieur en direction de l'alésage (126) ;
dans lequel les surfaces de paroi plates de l'alésage (126) sont configurées pour s'engager sur les faces plates du foret (42) pour retenir sans rotation la queue (44) du foret dans le support de foret et les éléments de retenue (136a, 136b, 136c) sont configurés pour s'engager dans la rainure annulaire (48) du foret pour retenir axialement le foret dans le support de foret, **caractérisé en ce que** :
le support de foret (100) est destiné à retenir de manière amovible un foret (42) avec une queue de coupe transversale triangulaire (44), dans lequel les trois faces plates de la queue du foret sont agencées de manière générale dans un triangle et les trois surfaces de paroi interne plates (128a, 128b, 128c) de l'alésage récepteur de queue (126) du corps de support (120) sont agencées de manière générale dans un triangle ; et
la paroi interne (132) de l'alésage récepteur de queue (126) du corps de support (120) comprend une surface de paroi concave (130a, 130b, 130c) à chaque jonction entre des surfaces de paroi interne plates adjacentes (128a, 128b, 128c), chaque surface de paroi concave étant configurée pour s'engager sur une surface de paroi convexe (46) à une jonction entre des faces plates adjacentes de la queue de foret (44), et chaque fenêtre (134a, 134b, 134c) est définie dans l'une des surfaces de paroi interne concaves.

2. Support de foret (100) selon la revendication 1, dans lequel les fenêtres (134a, 134b, 134c) sont coniques.

3. Support de foret (100) selon la revendication 1 ou la revendication 2, dans lequel chaque élément de retenue (136a, 136b, 136c) comprend une goupille ou une bille.

4. Support de foret (100) selon l'une quelconque des revendications précédentes, dans lequel le corps de support (120) comprend une surface externe (138) avec un évidement annulaire (140) qui reçoit la bande élastique (142).

5. Support de foret (100) selon l'une quelconque des revendications précédentes, comprenant en outre un arbre (122) s'étendant vers l'arrière depuis le corps de support (120) et configuré pour être retenu dans un mandrin ou un support de foret d'un outil électrique.

6. Support de foret (100) selon la revendication 5, dans lequel l'arbre (122) comprend une queue polygonale avec une rainure annulaire.

7. Support de foret (100) selon l'une quelconque des revendications précédentes, le support de foret convenant pour retenir de manière amovible des queues d'au moins deux forets, chaque queue ayant un diamètre différent et chaque queue ayant trois faces plates aménagées de manière générale dans un triangle et une rainure annulaire, dans lequel :
le corps de support (220) a une section frontale (226a) ayant un plus grand diamètre et une section arrière (226b) ayant un diamètre plus petit, chaque section étant délimitée par une paroi interne ayant trois surfaces de paroi interne plates agencées de manière générale dans un triangle ;
une première fenêtre (234a) de la pluralité de fenêtres est définie dans la paroi interne de la section frontale (226a) et s'étend radialement vers l'extérieur de la section frontale de l'alésage (226) ;
une seconde fenêtre (234b) de la pluralité de fenêtres est définie dans la paroi interne de la section arrière (226b) et s'étend radialement vers l'extérieur de la section arrière de l'alésage (226) ;
un premier élément de retenue (236a) de la pluralité d'éléments de retenue s'étend au moins en partie à travers la première fenêtre (234a) dans la section frontale de l'alésage (226) ;
un second élément de retenue (236b) de la pluralité d'éléments de retenue s'étend au moins en partie à travers la seconde fenêtre (234b) dans la section arrière de l'alésage (226) ;
une première bande élastique (242a) est disposée autour du premier élément de retenue (236a) et presse le premier élément de retenue radialement vers l'intérieur en direction de la section frontale (226a) de l'alésage ; et
une seconde bande élastique (242b) est disposée autour du second élément de retenue (236b) et presse le second élément de retenue radialement vers l'intérieur en direction de la section arrière (226b) de l'alésage ; et
dans lequel les surfaces de paroi plates (228a) de la section frontale (226a) de l'alésage (226) sont configurées pour s'engager sur les faces plates d'un premier foret des au moins deux forets, tandis que le premier élément de retenue (236a) s'engage dans la rainure annulaire du premier foret pour retenir axialement la queue du premier foret dans la section frontale de l'alésage, et les surfaces de paroi plates (228b) de la section arrière (226b) de l'alésage sont configurées pour s'engager sur les faces plates d'un second foret des au moins deux forets, tandis que le second élément de retenue (236b) s'engage dans la rainure annulaire du second foret pour retenir axialement la queue du second foret dans la section arrière de l'alésage.

8. Support de foret (100) selon la revendication 7, dans lequel chacune des parois internes comprend une surface de paroi concave (230a, 230b) à chaque jonction entre les surfaces de paroi interne plates adjacentes (228a, 228b), chaque surface de paroi concave étant configurée pour s'engager sur une surface de paroi convexe (46) à une jonction entre des faces plates adjacentes du foret.

9. Support de foret (100) selon la revendication 7, dans lequel le corps de support (220) comprend une première surface externe avec un premier évidement annulaire (240a) qui reçoit la première bande élastique (242a) et une seconde surface externe avec un second évidement annulaire (240b) qui reçoit la seconde bande élastique (242b).

10. Support de foret (100) selon la revendication 7, dans lequel la première fenêtre (234a) comprend une première pluralité de fenêtres et le premier élément de retenue (236a) comprend une première pluralité d'éléments de retenue, chacune de la première pluralité de fenêtres recevant l'un de la première pluralité d'éléments de retenue.

11. Ensemble de foret comprenant :
un dit foret ayant une partie de travail et une dite queue couplée à une extrémité arrière de la partie de travail ; et
un support de foret (100) selon la revendication 1, dans lequel la bande élastique (142) est disposée autour des éléments de retenue (136a, 136b, 136c) et presse les éléments de retenue radialement vers l'intérieur en direction de l'alésage (126).
